# EUROPEAN PATENT APPLICATION

(11) **EP 4 757 129 A1**
(43) Date of publication of application: **10.06.2026**
(21) Application number: 25221336.8
(22) Date of filing: 08.12.2025
(51) Int. Cl.: H02K 3/24, H02K 3/38, H02K 9/197, H02K 7/10, H02K 7/00

(54) **ELECTRIC MACHINE**

(30) Priority: 09.12.2024 US 202463729535 P
(71) Applicant: BorgWarner Inc., Auburn Hills, MI 48326 (US)
(72) Inventor: MAYER, Andreas WP, Clarkston, MI, 48346 (US); ISHIHARA, Mitsuru, Rochester Hills, MI, 48304 (US); BOURN, James, Oxford, MI, 48371 (US); DIKO, Andi, Auburn Hills, MI, 48326 (US)
(74) Representative: Peterreins Schley

(57) **Abstract**

An electric machine includes a machine housing, a stator including a stator core defining a stator core interior and a plurality of windings including first and second end windings, and an internal core including first and second upper portions and first and second lower portions. The electric machine additionally includes a first outer insert engaged with the first upper portion, a second outer insert engaged with the second upper portion, a first inner insert engaged with the first lower portion, and a second inner insert engaged with the first lower portion. The first outer insert, the first inner insert, the first upper portion, and the first lower portion collectively define a first cooling channel for encapsulating the first end windings, and the second outer insert, the second inner insert, the second upper portion, and the second lower portion collectively define a second cooling channel for encapsulating the second end windings.

## Description

### CROSS-REFERENCE TO RELATED APPLICATIONS

The present application claims priority to and all the benefits of U.S. Provisional Patent Application No. 63/729,535 filed December 9, 2024, which is hereby expressly incorporated herein by reference in its entirety.

### BACKGROUND OF THE DISCLOSURE

### 1. Field of the Disclosure

The subject disclosure relates to the field of electric machines and, in particular, electric machines for use in a drive module assembly.

### 2. Description of the Related Art

Conventional drive module assemblies include an electric machine configured to deliver rotational torque to wheels of a vehicle. To help deliver rotational torque to wheels of a vehicle, conventional drive module assemblies include gears and a differential to ultimately deliver the rotational torque from the electric machine to wheels of the vehicle to allow the vehicle to maneuver.

As hybrid vehicles and battery electric vehicles become more prevalent, the need for efficient and reliable drive module assemblies has become increasingly important. One of the main challenges in designing drive module assemblies for hybrid vehicles and battery electric vehicles is achieving high efficiency while maintaining a compact size and low weight. Hybrid vehicles and battery electric vehicles often have limited space available for the drive module assembly, and any added weight can reduce the vehicle's range and performance.

In recent years, advances in electric motor technology and power electronics have led to the development of more compact and efficient drive module assemblies. Additionally, advances in electric motor technology have increased the power output and rotational speed of various electric motors, which results in increased heat produced by the electric motors. To this end, there have been challenges with adequately cooling the electric motors. Therefore, there still remains a need for an electric machine with improved cooling capabilities, all while having improved efficiency and increased performance while addressing the deficiencies set forth above.

### SUMMARY OF THE INVENTION

An electric machine includes a machine housing defining a machine housing interior. The electric machine includes a stator disposed in the machine housing interior and extending along a stator axis. The stator includes a stator core defining a stator core interior and a plurality of windings disposed in the stator core interior. The plurality of windings has first end windings extending outside of the stator core interior in a first direction along the stator axis and second end windings extending outside of the stator core interior in a second direction along the stator axis opposite the first direction. The electric machine further includes an internal core surrounding the plurality of windings within the stator core interior. The internal core includes a first upper portion disposed outside of and extending from the stator core interior in the first direction, a second upper portion disposed outside of and extending from the stator core interior in the second direction, a first lower portion extending from the stator core interior in the first direction and disposed between the first upper portion and the stator axis, and a second lower portion extending from the stator core interior in the second direction and disposed between the second upper portion and the stator axis. The electric machine additionally includes a first outer insert disposed about the stator axis and engaged with the first upper portion, a second outer insert disposed about the stator axis and engaged with the second upper portion, a first inner insert disposed about the stator axis and disposed between the first outer insert and the stator axis with the first inner insert being engaged with the first lower portion, and a second inner insert disposed about the stator axis and disposed between the second outer insert and the stator axis with the second inner insert being engaged with the first lower portion. The first outer insert, the first inner insert, the first upper portion, and the first lower portion collectively define a first cooling channel for encapsulating the first end windings, and the second outer insert, the second inner insert, the second upper portion, and the second lower portion collectively define a second cooling channel for encapsulating the second end windings.

### BRIEF DESCRIPTION OF THE DRAWINGS

Other advantages of the present invention will be readily appreciated, as the same becomes better understood by reference to the following detailed description when considered in connection with the accompanying drawings.
FIG. 1 is a perspective view of an electric machine including machine housing, a stator, a rotor, and an internal core.
FIG. 2 is a perspective view of the stator and the internal core.
FIG. 3 is a cross-sectional view of the stator including a plurality of windings, and the internal core.

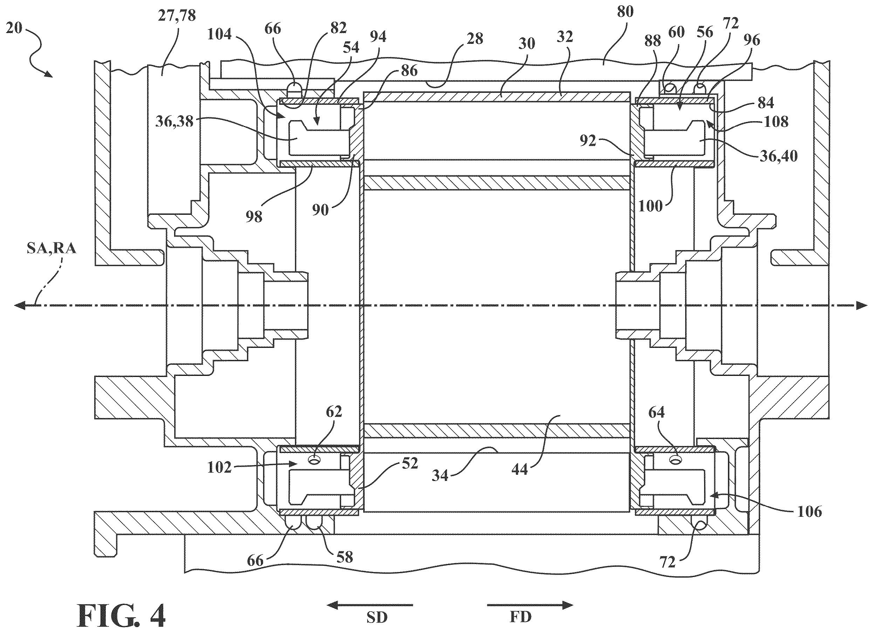

FIG. 4 is a cross-sectional view of the electric machine including a first outer insert disposed about the stator axis and engaged with the internal core, a second outer insert disposed about the stator axis and engaged with the internal core, a first inner insert disposed about the stator axis and disposed between the first outer insert and the stator axis with first inner insert being engaged with the internal core, and a second inner insert disposed about the stator axis and disposed between the second outer insert and the stator axis with the second inner insert being engaged with the internal core.
FIG. 5 is a side cross-sectional view of the electric machine, with the electric machine including a first supply path and first supply inlet.
FIG. 6 is a side cross-sectional view of the electric machine, with the electric machine including a first outlet path and a first outlet.
FIG. 7 is a cross-sectional view of a drive module assembly including the electric machine and a geartrain.
FIG. 8 is a close-up, cross-sectional view of the first outer insert and the first inner insert, with the internal core having a first upper portion and a first lower portion, with the first outer insert, the first inner insert, the first upper portion, and the first lower portion collectively defining a first cooling channel for encapsulating first end windings of the stator.
FIG. 9 is a close-up, cross-sectional view of the second outer insert and the second inner insert, with the internal core having a second upper portion and a second lower portion, with the second outer insert, the second inner insert, the second upper portion, and the second lower portion collectively defining a second cooling channel for encapsulating second end windings of the stator.

### DETAILED DESCRIPTION OF THE INVENTION

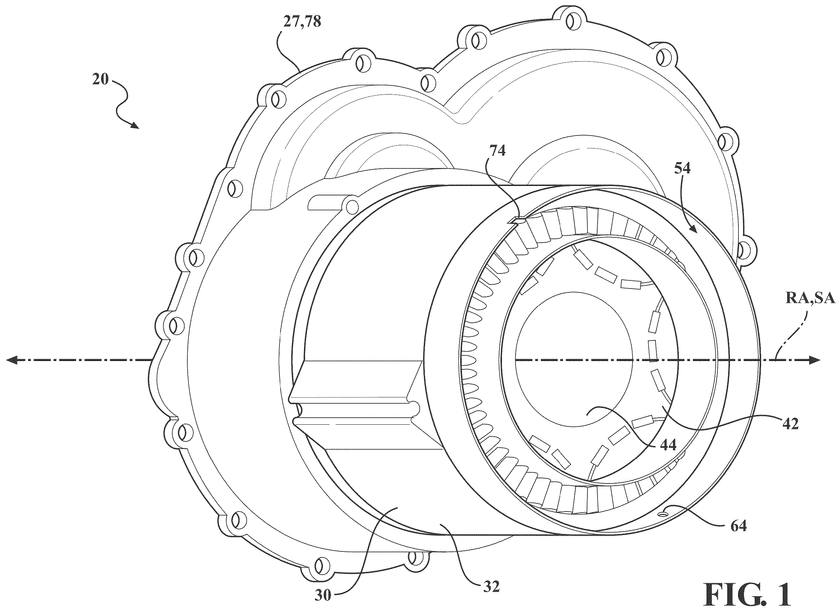

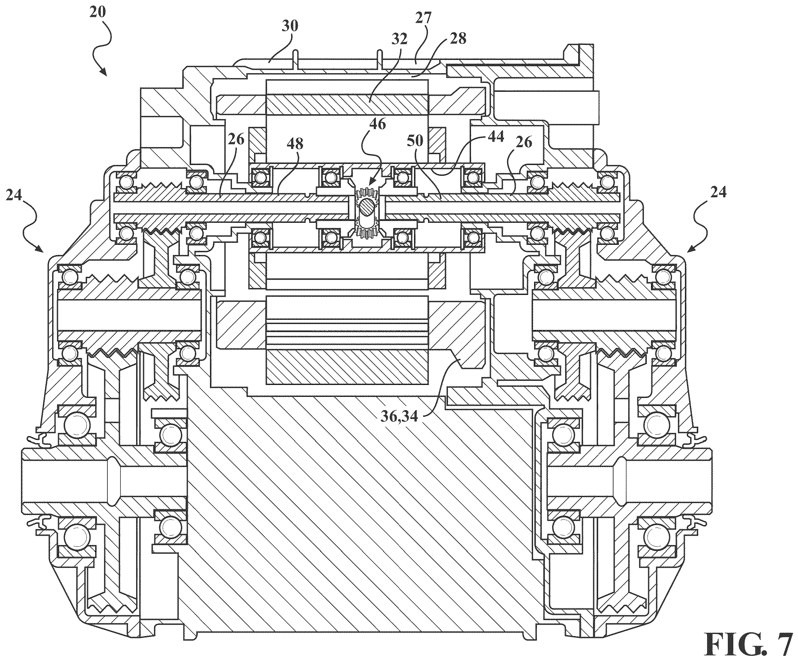

With reference to the Figures, wherein like numerals indicate like parts throughout the several views, an electric machine 20 is generally shown in FIG. 1. The electric machine 20 may be used in a drive module assembly 22, as shown in FIG. 7, with the drive module assembly 22 including the electric machine 20 and a geartrain 24 rotatably coupled to an output 26 of the electric machine 20. The electric machine 20 is configured to deliver rotational torque to wheels of a vehicle through the geartrain 24. The vehicle may include an internal combustion engine and, therefore, be a hybrid vehicle. The vehicle may also be a battery electric vehicle that is free of an internal combustion engine. It is to be appreciated that the vehicle may include one or more of the drive module assemblies 22, such as two drive module assemblies.

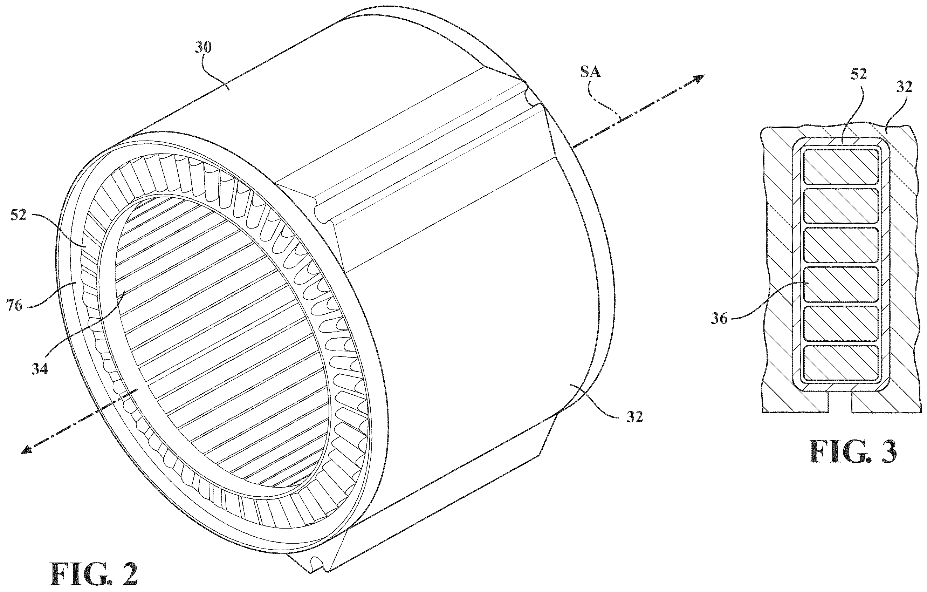

With reference to FIGS. 1 and 4, the electric machine 20 includes a machine housing 27 defining a machine housing interior 28. The electric machine 20 also includes a stator 30 disposed in the machine housing interior 28 and extending along a stator axis SA. As shown in FIGS. 1-4, the stator 30 includes a stator core 32 defining a stator core interior 34 and a plurality of windings 36 disposed in the stator core interior 34. The stator core 32 may be a plurality of stator laminations. The plurality of windings 36 has first end windings 38 extending outside of the stator core interior 34 in a first direction FD along the stator axis SA and second end windings 40 extending outside of the stator core interior 34 in a second direction SD along the stator axis SA opposite the first direction FD.

With particular reference to FIGS. 1 and 4, the electric machine 20 also includes a rotor 42 disposed in the stator core interior 34 and extending along a rotor axis RA. The rotor 42 may define a rotor interior 44 disposed about the rotor axis RA. The electric machine 20 may include a differential 46, as shown in FIG. 7, disposed in the rotor interior 44 and rotatably coupled to the rotor 42. The electric machine 20 may include a first input shaft 48 rotatably coupled to the differential 46, and a second input shaft 50 rotatably coupled to the differential 46.

With reference again to FIGS. 1-4, the electric machine 20 includes an internal core 52 surrounding the plurality of windings within the stator core interior 34. The internal core 52 may be further defined as an overmolded core. When present, the overmolded core comprises an overmolded material. The overmolded material may include high temperature plastic, thermoset, polyphenylene sulfide (PPS), thermoplastic, thermotransfer material, and the like, and may be formed through an injection molding process. The internal core 52 may encapsulate each winding of the plurality of windings 36 along the stator axis SA. The internal core 52 may be engaged with each winding of the plurality of windings 36. Typically, the internal core 52 and the stator core 32 are separate components (i.e., two or more pieces). Typically, the internal core 52 and the stator core 32 are comprised of different materials. For example, the stator core 32, as mentioned above, may be a plurality of laminations comprised of [electrical steel, and the internal core 52 may be an overmolded material.

As shown in FIG. 4, the internal core 52 and the machine housing 27 at least partially define a first cooling channel 54 encapsulating the first end windings 38 and a second cooling channel 56 for encapsulating the second end windings 40. With reference to FIGS. 1-4, the internal core 52 may be in direct contact with the plurality of windings 36 within the stator core interior 34 such that the stator 30 is free of a fluid path fluidly coupling the first cooling channel 54 and the second cooling channel 56. Alternatively, or additionally, the internal core 52 and the plurality of windings 36 may define a barrier surface 76 perpendicular to stator axis SA with the barrier surface 76 being continuous within the stator core interior 34 such that the stator 30 is free of a fluid path fluidly coupling the first cooling channel 54 and the second cooling channel 56. The stator 30 may be free of insulation paper between the plurality of windings of the stator 30, particularly in embodiments as set forth above where the internal core 52 is in direct contact with the plurality of windings 36 within the stator core interior 34, and/or when the internal core 52 and the plurality of windings 36 define the barrier surface 76 being continuous within the stator core interior 34 such that the stator 30 is free of a fluid path fluidly coupling the first cooling channel 54 and the second cooling channel 56.

The electric machine 20 may include a first supply path 58 configured to direct fluid to the first cooling channel 54 through a first supply inlet 62, and a second supply path 60 configured to direct fluid to the second cooling channel 56 through a second supply inlet 64. The first supply inlet 62 is fluidly coupled to the first supply path 58 and the first cooling channel 54, and the second supply inlet 64 is fluidly coupled to the second supply path 60 and the second cooling channel 56. Typically, the internal core 52 is disposed between the first and second supply inlets 62, 64 such that the internal core 52 fluidly separates the first and second supply paths 58, 60. The electric machine 20 may further include a first outlet path 66 configured to receive fluid from the first cooling channel 54 from a first outlet 68. The first outlet 68 is fluidly coupled to the first cooling channel 54 and the first outlet path 66. The electric machine 20 also includes a second outlet path 72 configured to receive fluid from the second cooling channel 56 from a second outlet 74. The second outlet 74 is fluidly coupled to the second cooling channel 56 and the second outlet path 72. The first outlet path 66 may be configured to direct fluid from the first cooling channel 54 through the first outlet 68 to a sump 70, and the second outlet path 72 may be configured to direct fluid from the second cooling channel 56 through the second outlet 74 to the sump 70.

In one embodiment, the first and second cooling channels 54, 56 are fluidly separate from one another. In other words, fluid from the first cooling channel 54 is unable to enter the second cooling channel 56, and fluid from the second cooling channel 56 is unable to enter the first cooling channel 54. It is to be appreciated that fluid from the first cooling channel 54 and second cooling channel 56 may both enter into a single sump, or that the fluid from the first cooling channel 54 may enter into a first sump and that the fluid from the second cooling channel 56 may enter into a second sump. In either embodiment, after the fluid leaves the sump, the fluid that enters the first supply path 58 remains separate from the fluid that enters the second supply path 60 and, therefore, the first and second cooling channels 54, 56 are fluidly separate from one another.

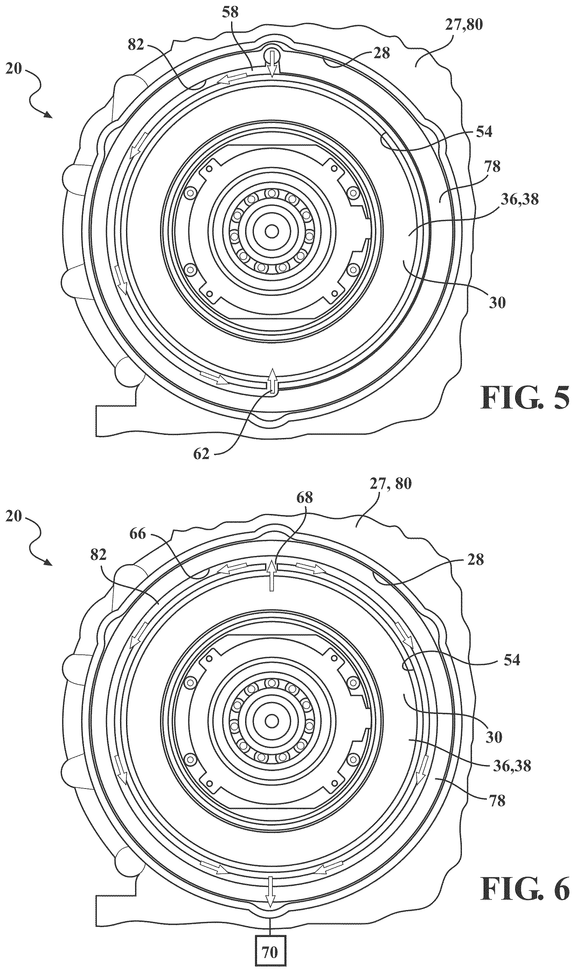

The first supply path 58 may spiral about the stator axis SA and the second supply path 60 may spiral about the stator axis SA, as best shown in FIGS. 5 and 6. It is to be appreciated that the first supply path 58 and second supply path 60 may spiral about the stator axis SA with a pitch angle of zero, and any pitch angle greater than zero. The first supply path 58 may be fluidly separate from the second supply path 60 such that the first supply path 58 independently supplies fluid to the first cooling channel 54 and the second supply path 60 independently supplies fluid to the second cooling channel 56.

The machine housing 27 may be further defined as a first machine housing 78 and a second machine housing 80 coupled to the first machine housing 78, as shown in FIGS. 4 and 7. The first machine housing 78 may be at least partially nested within the second machine housing 80. As shown in FIG. 1, the second machine housing 80 is removed to show the stator 30, the internal core 52, and the rotor 42. When present, the first machine housing 78 at least partially defines the first cooling channel 54 with the internal core 52, and the second machine housing 80 at least partially defines the second cooling channel 56 with the internal core 52. In one embodiment, the first supply path 58 is defined by the first machine housing 78, and the second supply path 60 is defined by the second machine housing 80. In such embodiments, the first machine housing 78 may have a first inner housing surface 82 facing the stator axis SA, the second machine housing 80 may have a second inner housing surface 84 facing the stator axis SA, and the first supply path 58 may be defined by the first inner housing surface 82 and the second supply path 60 may be defined by the second inner housing surface 84. For example, the first supply path 58 may be entirely defined by the first machine housing 78 and the second supply path 60 may be entirely defined by the second machine housing 80. It is contemplated that the first supply path 58 and second supply path 60 may be collectively defined between the first machine housing 78 and the second machine housing 80, respectively, and one or more components, as described below.

As shown in FIGS. 4, 8, and 9, the internal core 52 includes a first upper portion 86 disposed outside of and extending from the stator core interior 34 in the first direction FD, a second upper portion 88 disposed outside of and extending from the stator core interior 34 in the second direction SD, a first lower portion 90 extending from the stator core interior 34 in the first direction FD and disposed between the first upper portion 86 and the stator axis SA, and a second lower portion 92 extending from the stator core interior 34 in the second direction SD and disposed between the second upper portion 88 and the stator axis SA. The first upper portion 86, second upper portion 88, first lower portion 90, and the second lower portion 92 may be referred to as sealing extrusions. The first upper portion 86, the second upper portion 88, the first lower portion 90, and the second lower portion 92 may be integral with one another.

The internal core 52 may include a body portion 93 disposed in the stator core 32. The first upper portion 86 and the first lower portion 90 extend from the body portion 93 in the first direction FD, and the second upper portion 88 and the second lower portion 92 extend from the body portion 93 in the second direction. Typically, the body portion 93, the first upper portion 86, the first lower portion 90, the second upper portion 88, and the second lower portion 92 are integral with one another (i.e., one piece).

The electric machine 20 includes a first outer insert 94 disposed about the stator axis SA and engaged with the first upper portion 86, and a second outer insert 96 disposed about the stator axis SA and engaged with the second upper portion 88. The electric machine 20 also includes a first inner insert 98 disposed about the stator axis SA and disposed between the first outer insert 94 and the stator axis SA, with the first inner insert 98 being engaged with the first lower portion 90. The electric machine 20 may also include a second inner insert 100 disposed about the stator axis SA and disposed between the second outer insert 96 and the stator axis SA, with the second inner insert 100 being engaged with the first lower portion 90. The first outer insert 94, the first inner insert 98, the first upper portion 86, and the first lower portion 90 collectively define the first cooling channel 54 for encapsulating the first end windings 38, and the second outer insert 96, the second inner insert 100, the second upper portion 88, and the second lower portion 92 collectively define the second cooling channel 56 for encapsulating the second end windings 40. Specifically, the first outer insert 94 is engaged with the first upper portion 86 to form a seal, the second outer insert 96 is engaged with the second upper portion 88 to form a seal, the first lower portion 90 is engaged with the first inner insert 98 to form a seal, and the second lower portion 92 is engaged with the second inner insert 100 to form a seal. Additionally, the first outer insert 94, the first inner insert 98, the first upper portion 86, the first lower portion 90, the first machine housing 78, and the internal core 52 collectively define the first cooling channel 54 for encapsulating the first end windings 38, and the second outer insert 96, the second inner insert 100, the second upper portion 88, the second lower portion 92, the second machine housing 80, and the internal core 52 collectively define the second cooling channel 56 for encapsulating the second end windings 40. When the first cooling channel 54 is defined as described above, the only source of fluid into and out of the first cooling channel 54 is typically through only the first supply path 58 and the first outlet path 66, respectively. Similarly, when the second cooling channel 54 is defined as described above, the only source of fluid into and out of the second cooling channel 56 is typically through only the second supply path 60 and the second outlet path 72, respectively.

Having the first outer insert 94, the first inner insert 98, the first upper portion 86, and the first lower portion 90 collectively define the first cooling channel 54 for encapsulating the first end windings 38, and the second outer insert 96, the second inner insert 100, the second upper portion 88, and the second lower portion 92 collectively define the second cooling channel 56 for encapsulating the second end windings 40 offers several advantages. First, having the first outer insert 94, the first inner insert 98, the first upper portion 86, and the first lower portion 90 collectively define the first cooling channel 54 for encapsulating the first end windings 38, and the second outer insert 96, the second inner insert 100, the second upper portion 88, and the second lower portion 92 collectively define the second cooling channel 56 for encapsulating the second end windings 40 allows for a complete seal of the first and second cooling channels 54, 56 such that the only fluid into and out of the first and second cooling channels 54, 56 is associated with the respective inlets and outlets.

Second, having the first outer insert 94, the first inner insert 98, the first upper portion 86, and the first lower portion 90 collectively define the first cooling channel 54 for encapsulating the first end windings 38, and the second outer insert 96, the second inner insert 100, the second upper portion 88, and the second lower portion 92 collectively define the second cooling channel 56 for encapsulating the second end windings 40 allows for ease of manufacturing and flexibility in design as the first outer insert 94, the first inner insert 98, the first upper portion 86, and the first lower portion 90 may be designed based on each specific application, and the second outer insert 96, the second inner insert 100, the second upper portion 88, and the second lower portion 92 may be specifically design based on each specific application.

Third, having the first outer insert 94 being engaged with the first upper portion 86, the first inner insert 98 being engaged with the first lower portion 90, the second outer insert being engaged with the second upper portion 88, and the second inner insert 100 being engaged with the second lower portion 92 allows for better cooling of the stator 32 because the components defining the first and second cooling channels 54, 56 are not engaged solely with the stator core 32, which allows for better heat dissipation. In one embodiment, the first outer insert 94 is directly engaged with the first upper portion 86, the first inner insert 98 is directly engaged with the first lower portion 90, the second outer insert 96 is directly engaged with the second upper portion 88, and the second inner insert 100 is directly engaged with the second lower portion 92. In yet another embodiment, the first outer insert 94 is solely directly engaged with the first upper portion 86 to form a seal, the first inner insert 98 is solely directly engaged with the first lower portion 90 to form a seal, the second outer insert 96 is solely directly engaged with the second upper portion 88 to form a seal, and the second inner insert 100 is solely directly engaged with the second lower portion 92 to form a seal. In other words, the first outer insert 94, the first inner insert 98, the second outer insert 96, and the second inner insert 100 are not engaged with the stator core 32, which allows for better heat dissipation. Additionally, having the first outer insert 94 engaged with the first upper portion 86, the first inner insert 98 engaged with the first lower portion 90, the second outer insert 96 engaged with the second upper portion 88, and the second inner insert 100 engaged with the second lower portion 92 allows for the first and second cooling channels 54, 56 to be formed without the use of fasteners, which typically are engaged with various components of an electric machine and the stator core to form first and second cooling channels. However, engagement of various fasteners to the stator core can negatively affect the flux of the stator core, and such fasteners often overheat and require further cooling. To this end, having the first outer insert 94 engaged with the first upper portion 86, the first inner insert 98 engaged with the first lower portion 90, the second outer insert 96 engaged with the second upper portion 88, and the second inner insert 100 engaged with the second lower portion 92 may remove the need for use of any fasteners as the first and second cooling channels 54, 56 may be formed without the use of any fasteners.

Additionally, having the first outer insert 94 being engaged with the first upper portion 86, the first inner insert 98 being engaged with the first lower portion 90, the second outer insert 96 being engaged with the second upper portion 88, and the second inner insert 100 being engaged with the second lower portion 92 allows for blind assembly of the electric machine 20 and, in particular, when forming the first and second cooling channels 54, 56 during assembly of the electric machine 20. Also, having the first outer insert 94 being engaged with the first upper portion 86, the first inner insert 98 being engaged with the first lower portion 90, the second outer insert 96 being engaged with the second upper portion 88, and the second inner insert 100 being engaged with the second lower portion 92 removes the need of using magnetic material, such as steel, for assembly of the electric machine 20 and, in particular, for securing an enclosure to define first and second cooling channels. Use of magnetic steel for fasteners and, in particular, fasteners to the stator core itself, can negatively alter the magnetic flux and result in the steel magnetic fasteners overheating. Furthermore, having the first outer insert 94 being engaged with the first upper portion 86, the first inner insert 98 being engaged with the first lower portion 90, the second outer insert 96 being engaged with the second upper portion 88, and the second inner insert 100 being engaged with the second lower portion 92 allows for substantially similar or identical thermal expansion coefficients of the first outer insert 94, the first inner insert 98, the second outer insert 96, and the second inner insert 100 and the internal core 52.

The first outer insert 94 may be cylindrically disposed 360 degrees about the stator axis SA. The second outer insert 96 may be cylindrically disposed 360 degrees about the stator axis SA. The first inner insert 98 may be cylindrically disposed 360 degrees about the stator axis SA. The second inner insert 100 may be cylindrically disposed 360 degrees about the stator axis SA. The first outer insert 94 is typically spaced from the first inner insert 96 with respect to the stator axis SA. The first outer insert 94 may be oriented parallel to the first inner insert 98. The second outer insert 96 is typically spaced from the second inner insert 100 with respect to the stator axis SA. The second outer insert 96 may be oriented parallel to the second inner insert 100.

It is to be appreciated that the first outer insert 94 and the first inner insert 98 may be integral with one another. Similarly, the second outer insert 96 and the second inner insert 100 may be integral with one another. Alternatively, the first outer insert 94 and the first inner insert 98 may be separate components from one another. Similarly, the second outer insert 96 and the second inner insert 100 are separate components from one another.

The machine housing 27 may be engaged with the first outer insert 94 and the first inner insert 98 to further collectively define the first cooling channel 54, and the machine housing 27 may be engaged with the second outer insert 96 and the second inner insert 100 to further collectively define the second cooling channel 56. In embodiments where the machine housing 27 is further defined as the first machine housing 78 and the second machine housing 80, the first machine housing 78 may be engaged with the first outer insert 94 and the first inner insert 98 to further collectively define the first cooling channel 54, and the second machine housing 80 may be engaged with the second outer insert 96 and the second inner insert 100 to further collectively define the second cooling channel 56.

The first outer insert 94 may define the first supply inlet 62 and the second outer insert 96 may define the second supply inlet 64. The first outer insert 94 may also define the first outlet 68, and the second outer insert 96 may define the second outlet 74. The first supply inlet 62 and the first outlet 68 may be offset from one another about and with respect to the stator axis SA, and the second supply inlet 64 and the second outlet 74 may be offset from one another about and with respect to the stator axis SA. For example, the first supply inlet 62 may be 180 degrees offset from the first outlet 68 with respect to the stator axis SA.

The first supply path 58 may be defined between the machine housing 27 and the first outer insert 94, and the second supply path 60 may be defined between the machine housing 27 and the second outer insert 96. Similarly, the first outlet path 66 may be defined between the machine housing 27 and the first outer insert 94, and the second outlet path 72 may be defined between the machine housing 27 and the second outer insert 96.

The first supply path 58 and the first outlet path 66 may be axially offset with respect to one another with respect to the stator axis SA. In other words, as shown in FIGS 4-6, the first supply path 58 may be defined exclusively by the first machine housing 78 or by the first machine housing 78 and the first outer insert 94, and, similarly, the first outlet path 66 may be defined exclusively by the first machine housing 78 or by the first machine housing 78 and the first outer insert 94, with the first supply path 58 and the first outlet path 66 being axially offset from one another. Additionally, as shown in FIG. 5, the first supply path 58 is shown as being defined 180 degrees about the stator axis SA, and the first outlet path 66 is shown as being defined 360 degrees about the stator axis SA. To accommodate both the first supply path 58 and the first outlet path 66, the first supply path 58 and the first outlet path 66 are axially offset from one another. It is to be appreciated, that while not shown explicitly in the FIGS., the same as described above equally applies to the second supply path 60 and the second outlet path 72.

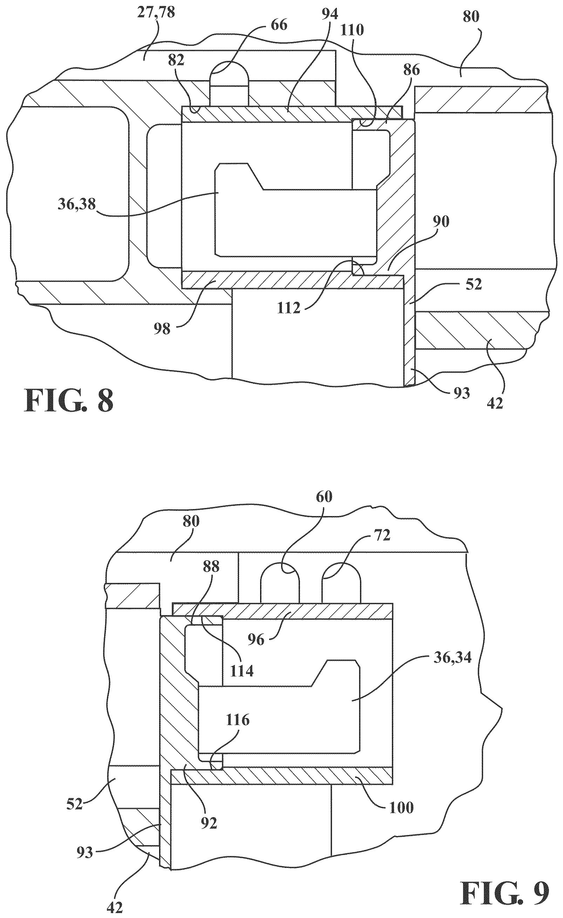

With reference to FIG. 8, the first outer insert 94, the first inner insert 98, the first upper portion 86, and the first lower portion 90 are shown as collectively defining the first cooling channel 54 for encapsulating the first end windings 38. One of the first outer insert 94 and the first upper portion 86 may have a first outer notch 110, with the other of the first outer insert 94 and the first upper portion 86 of the internal core 52 extending into the first outer notch 110. For example, the first outer insert 94 may have the first outer notch 110, and the first upper portion 86 of the internal core 52 may extend into the first outer notch 110. The first outer notch 110 may have any suitable configuration, such as facing the stator axis SA, facing away from the stator axis SA, or facing parallel with respect to the stator axis SA. The first upper portion 86 extending into the first outer notch 110 forms a seal as the first upper portion 86 is engaged with the first outer insert 94. Similarly, one of the first inner insert 98 and the first lower portion 90 may have a first inner notch 112, with the other of the first inner insert 98 and the first lower portion 90 of the internal core 52 extending into the first inner notch 112. For example, the first inner insert 98 may define the first inner notch 112, and the first lower portion 90 of the internal core 52 may extend into the first inner notch 112. The first inner notch 112 may have any suitable configuration, such as facing the stator axis SA, facing away from the stator axis SA, or facing parallel with respect to the stator axis SA. The first lower portion 90 extending into the first inner notch 112 forms a seal as the first lower portion 90 is engaged with the first inner insert 98.

Similarly, with reference to FIG. 9 the second outer insert 96, the second inner insert 100, the second upper portion 88, and the second lower portion 92 are shown as collectively defining the second cooling channel 56 for encapsulating the second end windings 40. One of the second outer insert 96 and the second upper portion 88 may have a second outer notch 114, with the other of the second outer insert 96 and the second upper portion 88 of the internal core 52 extending into the second outer notch 114. For example, the second outer insert 96 may have the second outer notch 114, and the second upper portion 88 of the internal core 52 may extend into the second outer notch 114. The second outer notch 114 may have any suitable configuration, such as facing the stator axis SA, facing away from the stator axis SA, or facing parallel with respect to the stator axis SA. The second upper portion 88 extending into the second outer notch 114 forms a seal as the second upper portion 88 is engaged with the second outer insert 96. Similarly, one of the second inner insert 100 and the second lower portion 92 may have a second inner notch 116, with the other of the second inner insert 100 and the second lower portion 92 of the internal core 52 extending into the second inner notch 116. For example, the second lower portion 92 may have the second inner notch 116, and the second lower portion 92 of the internal core 52 may extend into the second inner notch 116. The second inner notch 116 may have any suitable configuration, such as facing the stator axis SA, facing away from the stator axis SA, or facing parallel with respect to the stator axis SA. The second lower portion 92 extending into the second inner notch 116 forms a seal as the second lower portion 92 is engaged with the second inner insert 100.

With reference to FIGS. 4-6, the first cooling channel 54 may be configured such that, when the fluid is pressurized, the fluid flows from the first lower cooling portion 102 to the first upper cooling portion 104 and such that, when the fluid is not pressurized, the fluid does not flow from the first lower cooling portion 102 to the first upper cooling portion 104. This allows for better cooling of the first end windings 38, the plurality of windings 36, and the stator 30 in general. In one example, the first lower cooling portion 102 is configured to be under the first upper cooling portion 104 with respect to the ground. In other words, gravity may or may not force fluid to flow from the first upper cooling portion 104 to the first lower cooling portion 102, depending on the temperature of the fluid, whether a check valve is present in the first lower cooling portion 102, and/or whether a gear pump or centrifugal pump is used. However, when the fluid is pressurized and flows from the first supply inlet 62 to the first outlet 68, fluid flows upward against gravity from the first lower cooling portion 102 to the first upper cooling portion 104. This ensures that the fluid is evenly distributed throughout the first cooling channel 54 such that the cooler fluid in the first lower cooling portion 102 and absorbs heat from the stator 30 as the fluid moves into the first upper cooling portion 104. To this end, fluid in the first upper cooling portion 104 is typically hotter than the fluid in the first lower cooling portion 102. Additionally, fluid flowing from the first outlet 68 flows into the first outlet path 66, which further cools the stator 30 as the fluid flows over components of the stator 30 and into the sump 70. It is to be appreciated that when the fluid is pressurized, this includes when a pump is pressurizing the fluid and when the fluid is syphoned from the first lower cooling portion 102 to the first upper cooling portion 104 due to pressure caused by hot temperature of the fluid.

In one embodiment, the second cooling channel 56 includes a second lower cooling portion 106 adjacent the second supply inlet 64 and a second upper cooling portion 108 adjacent the second outlet 74. The second cooling channel 56 is configured such that, when the fluid is pressurized, the fluid flows from the second lower cooling portion 106 to the second upper cooling portion 108 and such that, when the fluid is not pressurized, the fluid does not flow from the second lower cooling portion 106 to the second upper cooling portion 108. It is to be appreciated that when the fluid is pressurized, this includes when a pump is pressurizing the fluid and when the fluid is syphoned from the second lower cooling portion 106 to the second upper cooling portion 108 due to pressure caused by hot temperature of the fluid. Having the second cooling channel 56 being configured such that, when the fluid is pressurized, the fluid flows from the second lower cooling portion 106 to the second upper cooling portion 108 and such that, when the fluid is not pressurized, the fluid does not flow from the second lower cooling portion 106 to the second upper cooling portion 108 allows for better cooling of the second end windings 40, the plurality of windings 36, and the stator 30 in general. In one example, the second lower cooling portion 106 is configured to be under the second upper cooling portion 108 with respect to the ground. In other words, gravity may or may not force fluid to flow from the second upper cooling portion 108 to the second lower cooling portion 106, depending on the temperature of the fluid, whether a check valve is present in the second lower cooling portion 106, and/or whether a gear pump or centrifugal pump is used. However, when the fluid is pressurized and flows from the second supply inlet 62 to the second outlet 74, fluid flows upward against gravity from the second lower cooling portion 106 to the second upper cooling portion 108. This ensures that the fluid is evenly distributed throughout the second cooling channel 56 such that the cooler fluid in the second lower cooling portion 106 and absorbs heat from the stator 30 as the fluid moves into the second upper cooling portion 108. To this end, fluid in the second upper cooling portion 108 is hotter than the fluid in the second lower cooling portion 106. Additionally, fluid flowing from the second outlet 74 flows into the second outlet path 72, which further cools the stator 30 as the fluid flows over components of the stator 30 and into the sump 70.

In another embodiment, the second cooling channel 56 is configured such that, when the fluid is pressurized, the fluid flows from the second upper cooling portion 108 to the second lower cooling portion 106 and such that, when fluid is not pressurized, the fluid flows from the second upper cooling portion 108 to the second lower cooling portion 106. Having the second cooling channel 56 being configured such that, when the fluid is pressurized, the fluid flows from the second upper cooling portion 108 to the second lower cooling portion 106 such that, when the fluid is not pressurized, the fluid flows from the second upper cooling portion 108 to the second lower cooling portion 106 allows for better cooling of the second end windings 40, the plurality of windings 36, and the stator 30 in general. In one example, the second lower cooling portion 106 is configured to be under the second upper cooling portion 108 with respect to the ground. In other words, gravity may or may not force fluid to flow from the second upper cooling portion 108 to the second lower cooling portion 106, depending on the temperature of the fluid, whether a check valve is present in the second lower cooling portion 106, and/or whether a gear pump or centrifugal pump is used. Similarly, when the fluid is pressurized and flows from the second supply inlet 62 to the second outlet 74, fluid flows downward from the second upper cooling portion 108 to second lower cooling portion 106. This ensures that the fluid is evenly distributed throughout the second cooling channel 56 such that the cooler fluid in the second upper cooling portion 108 absorbs heat from the stator 30 as the fluid moves into the second lower cooling portion 106. To this end, fluid in the second lower cooling portion 106 is hotter than the fluid in the second upper cooling portion 108.

In another embodiment, to help evenly remove heat from the stator 30, fluid flow in the first and second cooling channels 54, 56 may flow counter to one another. In other words, when the fluid in the first cooling channel 54 is pressurized and the fluid in the second cooling channel 56 is pressurized, the first cooling channel 54 is configured such that the fluid in the first cooling channel 54 flows from the first supply inlet 62 to the first outlet 68 in a first fluid direction, and the second cooling channel 56 is configured such that the fluid in the second cooling channel flows 56 from the second supply inlet 64 to the second outlet 74 in a second fluid direction opposite the first fluid direction. For example, the first supply inlet 62 and the second supply inlet 64 may offset from one another with respect to the stator axis SA. Additionally, or alternatively, the first outlet 68 and the second outlet 74 may be offset from one another with respect to the stator axis SA. It is to be appreciated that the first supply inlet 62 and the second supply inlet 64 may offset from one another with respect to the stator axis SA by 45 degrees, 90 degrees, 135 degrees, or 180 degrees. It is also to be appreciated that the first outlet 68 and the second outlet 74 may be offset from one another with respect to the stator axis SA by 45 degrees, 90 degrees, 135 degrees, or 180 degrees. Having the counter flow of the fluid through the first and second cooling channels 54, 56 to have the cooler fluid in the first lower cooling portion 102 and the hotter fluid in the first upper cooling portion 104, and the cooler fluid in the second upper cooling portion 108 and the hotter fluid in the second lower cooling portion 106 allows more even removal of heat from the stator 30 because cooler fluid is introduced at opposite ends of the stator 30.

Embodiment 1: An electric machine comprising:
a machine housing defining a machine housing interior;
a stator disposed in said machine housing interior and extending along a stator axis, wherein said stator comprises a stator core defining a stator core interior and a plurality of windings disposed in said stator core interior, and wherein said plurality of windings has first end windings extending outside of said stator core interior in a first direction along said stator axis and second end windings extending outside of said stator core interior in a second direction along said stator axis opposite said first direction;
an internal core surrounding said plurality of windings within said stator core interior, wherein said internal core comprises,
   a first upper portion disposed outside of and extending from said stator core interior in said first direction,
   a second upper portion disposed outside of and extending from said stator core interior in said second direction,
   a first lower portion extending from said stator core interior in said first direction and disposed between said first upper portion and said stator axis, and
   a second lower portion extending from said stator core interior in said second direction and disposed between said second upper portion and said stator axis;
a first outer insert disposed about said stator axis and engaged with said first upper portion;
a second outer insert disposed about said stator axis and engaged with said second upper portion;
a first inner insert disposed about said stator axis and disposed between said first outer insert and said stator axis, wherein said first inner insert is engaged with said first lower portion; and
a second inner insert disposed about said stator axis and disposed between said second outer insert and said stator axis, wherein said second inner insert is engaged with said first lower portion;
wherein said first outer insert, said first inner insert, said first upper portion, and said first lower portion collectively define a first cooling channel for encapsulating said first end windings; and
wherein said second outer insert, said second inner insert, said second upper portion, and said second lower portion collectively define a second cooling channel for encapsulating said second end windings.

Embodiment 2: The electric machine as set forth in embodiment 1, wherein said machine housing is engaged with said first outer insert and said first inner insert to further collectively define said first cooling channel, and wherein said machine housing is engaged with said second outer insert and said second inner insert to further collectively define said second cooling channel.

Embodiment 3: The electric machine as set forth in embodiment 2, wherein said machine housing is further defined as a first machine housing and a second machine housing coupled to said first machine housing, wherein said first machine housing is engaged with said first outer insert and said first inner insert to further collectively define said first cooling channel, and wherein said second machine housing is engaged with said second outer insert and said second inner insert to further collectively define said second cooling channel.

Embodiment 4: The electric machine as set forth in any one of the preceding embodiments further comprising a first supply path configured to direct fluid to said first cooling channel through a first supply outlet, and a second supply path configured to direct fluid to said second cooling channel through a second supply outlet.

Embodiment 5: The electric machine as set forth in embodiment 4, wherein said first supply path is fluidly separate from said second supply path.

Embodiment 6: The electric machine as set forth in any one of embodiments 4 and 5, wherein said first supply path is defined by said first machine housing, and said second supply path is defined by said second machine housing.

Embodiment 7: The electric machine as set forth in embodiment 6, wherein said first supply path spirals about said stator axis and said second supply path spirals about said stator axis.

Embodiment 8: The electric machine as set forth in any one of embodiments 4-7, wherein said first machine housing has a first inner housing surface, wherein said second machine housing has a second inner housing surface, and wherein said first fluid path is defined by said first inner housing surface and said second fluid path is defined by said second inner housing surface.

Embodiment 9: The electric machine as set forth in any one of the preceding embodiments, wherein said first outer insert and said first inner insert are integral with one another, and wherein said second outer insert and said second inner insert are integral with one another.

Embodiment 10: The electric machine as set forth in any one of the preceding embodiments, wherein said first outer insert and said first inner insert are separate components from one another, and wherein said second outer insert and said second inner insert are separate components from one another.

Embodiment 11: The electric machine as set forth in any one of the preceding embodiments, wherein said first upper portion, said second upper portion, said first lower portion, and said second lower portion are integral with one another.

Embodiment 12: The electric machine as set forth in any one of the preceding embodiments, wherein said internal core further comprises a body portion, wherein said body portion is disposed in said stator core and said first upper portion and said first lower portion extend from said body portion in said first direction, and said second upper portion and said second lower portion extend from said body portion in said second direction.

Embodiment 13: The electric machine as set forth in any one of the preceding embodiments, wherein said first outer insert is cylindrically disposed 360 degrees about said stator axis.

Embodiment 14: The electric machine as set forth in any one of the preceding embodiments, wherein second outer insert is cylindrically disposed 360 degrees about said stator axis.

Embodiment 15: The electric machine as set forth in any one of the preceding embodiments, wherein said first inner insert is cylindrically disposed 360 degrees about said stator axis.

Embodiment 16: The electric machine as set forth in any one of the preceding embodiments, wherein said second inner insert is cylindrically disposed 360 degrees about said stator axis.

Embodiment 17: The electric machine as set forth in any one of the preceding embodiments, wherein one of said first outer insert and said first upper portion of said internal core has a first outer notch, and wherein the other of said first outer insert and said first upper portion of said internal core extends into said first outer notch.

Embodiment 18: The electric machine as set forth in any one of the preceding embodiments, wherein one of said first inner insert and said first lower portion of said internal core has a first inner notch, and wherein the other of said first inner insert and said first lower portion of said internal core extends into said first inner notch.

Embodiment 19: The electric machine as set forth in any one of the preceding embodiments, wherein one of said second outer insert and said second upper portion has a second outer notch, and wherein the other of said second outer insert and said second upper portion of said internal core extends into said second outer notch.

Embodiment 20: The electric machine as set forth in any one of the preceding embodiments, wherein one of said second inner insert and said second lower portion has a second inner notch, and wherein the other of said second inner insert and said second lower portion of said internal core extends into said second inner notch.

Embodiment 21: The electric machine as set forth in any one of the preceding embodiments, wherein said internal core is further defined as an overmolded core.

Embodiment 22: The electric machine as set forth in any one of the preceding embodiments, wherein said internal core is in direct contact with said plurality of windings within said stator core interior such that the stator is free of a fluid path fluidly coupling said first cooling channel and said second cooling channel.

Embodiment 23: The electric machine as set forth in any one of the preceding embodiments, wherein said internal core and said plurality of windings define a barrier surface perpendicular to said stator axis, and wherein said barrier surface is continuous within said stator core interior such that the stator is free of a fluid path fluidly coupling said first cooling channel and said second cooling channel.

Embodiment 24: The electric machine as set forth in any one of the preceding embodiments further comprising a rotor disposed in said stator housing interior and extending along a rotor axis.

Embodiment 25: A drive module assembly comprising said electric machine as set forth in any one of the preceding embodiments, and further comprising a geartrain rotatably coupled to an output of said electric machine that is configured to deliver rotational torque to wheels of a vehicle.

## Claims

1. An electric machine comprising:
a machine housing defining a machine housing interior;
a stator disposed in said machine housing interior and extending along a stator axis, wherein said stator comprises a stator core defining a stator core interior and a plurality of windings disposed in said stator core interior, and wherein said plurality of windings has first end windings extending outside of said stator core interior in a first direction along said stator axis and second end windings extending outside of said stator core interior in a second direction along said stator axis opposite said first direction;
an internal core surrounding said plurality of windings within said stator core interior, wherein said internal core comprises,
a first upper portion disposed outside of and extending from said stator core interior in said first direction,
a second upper portion disposed outside of and extending from said stator core interior in said second direction,
a first lower portion extending from said stator core interior in said first direction and disposed between said first upper portion and said stator axis, and
a second lower portion extending from said stator core interior in said second direction and disposed between said second upper portion and said stator axis;
a first outer insert disposed about said stator axis and engaged with said first upper portion;
a second outer insert disposed about said stator axis and engaged with said second upper portion;
a first inner insert disposed about said stator axis and disposed between said first outer insert and said stator axis, wherein said first inner insert is engaged with said first lower portion; and
a second inner insert disposed about said stator axis and disposed between said second outer insert and said stator axis, wherein said second inner insert is engaged with said first lower portion;
wherein said first outer insert, said first inner insert, said first upper portion, and said first lower portion collectively define a first cooling channel for encapsulating said first end windings; and
wherein said second outer insert, said second inner insert, said second upper portion, and said second lower portion collectively define a second cooling channel for encapsulating said second end windings.

2. The electric machine as set forth in claim 1, wherein said machine housing is engaged with said first outer insert and said first inner insert to further collectively define said first cooling channel, and wherein said machine housing is engaged with said second outer insert and said second inner insert to further collectively define said second cooling channel.

3. The electric machine as set forth in any one of claims 1 and 2, wherein said first outer insert and said first inner insert are integral with one another, and wherein said second outer insert and said second inner insert are integral with one another.

4. The electric machine as set forth in any one of claims 1 and 2, wherein said first outer insert and said first inner insert are separate components from one another, and wherein said second outer insert and said second inner insert are separate components from one another.

5. The electric machine as set forth in any one of the preceding claims, wherein said first upper portion, said second upper portion, said first lower portion, and said second lower portion are integral with one another.

6. The electric machine as set forth in any one of the preceding claims, wherein said internal core further comprises a body portion, wherein said body portion is disposed in said stator core and said first upper portion and said first lower portion extend from said body portion in said first direction, and said second upper portion and said second lower portion extend from said body portion in said second direction.

7. The electric machine as set forth in any one of the preceding claims, wherein said first outer insert, said second outer insert, said first inner insert, and said second inner insert are each cylindrically disposed 360 degrees about said stator axis.

8. The electric machine as set forth in any one of the preceding claims, wherein one of said first outer insert and said first upper portion of said internal core has a first outer notch, and wherein the other of said first outer insert and said first upper portion of said internal core extends into said first outer notch.

9. The electric machine as set forth in any one of the preceding claims, wherein one of said first inner insert and said first lower portion of said internal core has a first inner notch, and wherein the other of said first inner insert and said first lower portion of said internal core extends into said first inner notch.

10. The electric machine as set forth in any one of the preceding claims, wherein one of said second outer insert and said second upper portion has a second outer notch, and wherein the other of said second outer insert and said second upper portion of said internal core extends into said second outer notch.

11. The electric machine as set forth in any one of the preceding claims, wherein one of said second inner insert and said second lower portion has a second inner notch, and wherein the other of said second inner insert and said second lower portion of said internal core extends into said second inner notch.

12. The electric machine as set forth in any one of the preceding claims, wherein said internal core is further defined as an overmolded core.

13. The electric machine as set forth in any one of the preceding claims, wherein said internal core is in direct contact with said plurality of windings within said stator core interior such that the stator is free of a fluid path fluidly coupling said first cooling channel and said second cooling channel.

14. The electric machine as set forth in any one of the preceding claims, wherein said internal core and said plurality of windings define a barrier surface perpendicular to said stator axis, and wherein said barrier surface is continuous within said stator core interior such that the stator is free of a fluid path fluidly coupling said first cooling channel and said second cooling channel.

15. A drive module assembly comprising said electric machine as set forth in any one of the preceding claims, and further comprising a geartrain rotatably coupled to an output of said electric machine that is configured to deliver rotational torque to wheels of a vehicle, and wherein said electric machine further comprises a rotor disposed in said stator housing interior and extending along a rotor axis.
